# EUROPEAN PATENT SPECIFICATION

(11) **EP 0 886 475 B1**
(45) Date of publication and mention of the grant of the patent: **18.07.2001**
(21) Application number: 97903249.7
(22) Date of filing: 08.02.1997
(51) Int. Cl.: A23G 9/02

(54) **FROZEN FOOD PRODUCT**
GEFRORENES LEBENSMITTEL
PRODUIT ALIMENTAIRE CONGELE

(30) Priority: 23.02.1996 EP 96301231
(43) Date of publication of application: 30.12.1998
(73) Proprietor: UNILEVER PLC, London EC4P 4BQ (GB); UNILEVER N.V., 3013 AL Rotterdam (NL)
(72) Inventor: OLDROYD, Jon Richard, Kettering, Northampton NN15 5HT (GB)
(74) Representative: Hugot, Alain
(86) International application number: EP9700592
(87) International publication number: WO9730599

(56) References cited:
- EP-A- 0 220 836
- EP-A- 0 460 330
- US-A- 4 130 668
- US-A- 5 164 212
- US-A- 5 298 275
- PATENT ABSTRACTS OF JAPAN vol. 12, no. 405 (C-539), 26 October 1988 & JP 63 146747 A (OOTA TOSHIYUKI), 18 June 1988,
- PATENT ABSTRACTS OF JAPAN vol. 5, no. 28 (C-044), 20 February 1981 & JP 55 153553 A (IMAMURA KUNIO ET AL.), 29 November 1980,

## Description

### Technical Field of the Invention

The invention relates to a frozen food product and a process for its manufacture.

### Background to the Invention

It is often desirable to include fruit in frozen food products. For example frozen confectionery products like water-ice or ice-cream often contain fruit pieces. These pieces provide an interesting appearance to the product and enhance the fruity taste thereof.

Frozen untreated fruit is unpalatable as its high water content (typically approximately 90%) and corresponding low soluble solids levels means that at typical frozen food temperatures (^{∼}-18°C) there is a very high percentage of ice. The ice content may be reduced by soaking the fruit in low molecular weight sugar syrups for extended time periods at elevated temperatures. The parallel decreases in water content, and increase in soluble solids, reduces the amount of ice present, making the fruit less icy. A problem with the inclusion of fruit pieces in frozen food products is that during processing for inclusion (eg. drying, sugar infusion, pasteurisation etc.) the natural breakdown of the fruit cell wall is exacerbated, resulting in a structure unlike that of the original fruit, with a very soft texture. Flavour volatiles and colour are also lost during this processing.

Furthermore many fruits, e.g. strawberries retain optimum condition for only a short time, and have a soft texture even when just ripe, which makes handling and subsequent post-harvest processing difficult.

It is an object of the present invention to provide a frozen food product containing fruit pieces which show a reduced tendency to lose texture during the process of pretreatment and using.

Surprisingly it has been found that if fruit pieces are derived from unripened fruit, they tend to have an improved texture retention and provide a better fruity bite to the frozen product.

### Disclosure of the Invention

We have observed that unripe fruit, in particular strawberries, can be processed for inclusion into frozen confections, such as ice cream, with less cell wall damage than corresponding ripe fruit, and this in turn gives a firmer, more fibrous end product.

Accordingly in a first embodiment the invention provides a frozen food product comprising fruit pieces of unripened fruit.

The frozen food product is a frozen confection. The term frozen confection includes milk containing frozen confections such as ice-cream, frozen yoghurt, sherbet, sorbet, ice milk and frozen custard; water ices, granitas, and frozen fruit purees.

Fruit pieces for use in products of the invention may be derived from all types of fruit. Preferably the fruit pieces are derived from soft fruit.

Examples of soft fruit are for example raspberry, blackberry, berry, red-currant, black-currant, strawberry, gooseberry, loganberry, blueberry, boysenberry, cranberry, elderberry, red grape, cherry, banana, melon, mango, prune, kiwi, fig, passion fruit, white-currant, peach, apricot, orange, lemon, grapefruit, papaya, nectarine, pineapple, plum, pear, rhubarb, lychee, mandarin and lime.

Applicants have found that the advantages of using unripened fruit are especially apparent while using red-fruit such as raspberry, blackberry, red-currant, blackcurrant, strawberry, loganberry, blueberry, boysenberry, cranberry, elderberry, red grape and cherry. Most clearly the advantages are observed while using strawberry.

The pieces of fruit should have sufficient size to distinguish them over the use of fruit pulp. The size of the fruit pieces may be adapted as desired and may depend on the type of fruit to be used. Generally, however the individual fruit piece will have a volume of at least 0.008 cm³, more preferred more than 0.025 cm³, most preferred more than 0.05 cm³ Generally the volume of the individual fruit pieces will be less than 8 cm³, more preferred less than 5 cm³, most preferred less than 2 cm3.

The pieces of fruit may be used as a separate part of the frozen food product, for example as decoration on top of frozen products e.g. cakes and ice-cream products or as filling e.g. in pastry and pies. Most preferred however the fruit pieces are mixed into the food product, for example fruit pieces mixed into water-ice or ice-cream. Surprisingly we have found that unripened fruit pieces which are mixed into the product provide an improved texture without negatively influencing the taste of the product to an unsatisfactory extent. The latter is surprising as one would expect unripened fruit to have an unacceptable flavour.

Unripened fruit pieces generally have a relatively higher level of water insoluble components than ripe fruit, therefore the solubility index (level of soluble solids divided by level of insoluble solids) increases while the fruit becomes ripe. Generally the ratio of the solubility index for ripe fruit to the solubility index for unripened fruit is more than 1.1, more general more than 1.2, most general more than 1.4. Therefore an alternative embodiment of the invention concerns a frozen food product comprising fruit pieces, wherein the ratio of solubility index for ripe fruit to the solubility index of the fruit pieces used in the frozen product is more than 1.1.

Surprisingly we have also found that an increased texture upon eating can be achieved if the frozen fruit has a lower drip loss. A suitable method for determining drip loss is described in example 3.

It has been found that a drip loss of less than 5wt%, more preferred less than 3 wt%, most preferred less than 1 wt% corresponds to excellent texture in the product. Hence an alternative embodiment of the invention concerns a frozen food product comprising fruit pieces, wherein the drip loss of the fruit pieces is less than 5 wt%.

Summarising the above,the invention relates to a frozen food product as defined by the appended claims.

Although sometimes this will not be necessary, normally the fruit pieces may be pre-processed prior to inclusion into the frozen food products. Examples of possible preprocessing steps include washing, removal of undesired parts such as pits, peels and tops, slicing or cutting, addition of sugars or flavours, for example in a (semi-) candying procedure, dyeing e.g. to give the unripened fruit the colour of ripe fruit, (partial) dehydration, pasteurization, pre-freezing etc.

Surprisingly we have observed that unripe fruit, in particular strawberries, when infused in a solution of sugar and the corresponding ripe fruit puree, a product was achieved which when incorporated into a frozen confection, had excellent taste compared to the ripe fruit plus additionally had a firmer texture. The fruit also resembled the ripe fruit in colour. Furthermore the unripe fruit was less damaged, which corresponds to the unripe fruit's ability to maintain texture and structure throughout processing.

If desired the fruit pieces may be (semi-)candied whereby the fruit pieces are soaked in a sweetener solution for a certain period e.g. 0.5 to 5 days.

If desired the fruit pieces may be subjected to a dehydrofreezing process such as disclosed in EP 431 703.

As indicated above, preferably the fruit pieces are added to a frozen confectionery product for example ice-cream. Although it is in principle possible to add the fruit pieces in any stage of the production process of the frozen confectionery it is generally preferred to add the fruit pieces towards the end of the production process to avoid unnecessary fragmentation of the fruit pieces e.g. in the aeration or freezing process.

Preferably the food product has a temperature of from -5°C to -25°C when the fruit pieces are added. The most appropriate temperature can be selected by choosing the temperature at which the frozen confection is soft enough to allow the mixing of ingredients into the mix, but yet hard or pasty enough to provide a supporting structure for the fruit pieces.

The invention will further be illustrated by means to the following examples.

### Example 1

### Preparation of pieces of ripe and unripened strawberry.

Green, unripe Elsanta strawberries were topped and washed. Ripe Elsanta strawberries are normally very soft and easily lose texture upon freezing and subsequent thawing. The small strawberries were left whole, the remaining cut in pieces of about 1 to 2 cm³.

The strawberries were blast frozen at -40°C for approximately 2 hours, then transferred to plastic bags and stored at -25°C until further use.

For comparison a batch of fully ripe Elsanta strawberries was treated and stored as above. The fully ripe strawberry had a solubility index of 7.6, the green unripe strawberry 4.0; the ratio if the solubility indices was hence 1.9.

The strawberries were semi-candied as follows: Frozen berries were placed in a 60wt% glucose syrup in water (Cerestar DE63), the ratio of the liquor to berries was 2:1 and mixture was kept for 48 hours at ambient temperature (after 24 hours the strawberries were sieved and put in a fresh liquor and hold therein until the end of the 48 hours period).

At the end of the holding period the strawberries were pasteurised at 80°C in the liquor using a steam kettle. The liquor was held at 80°C for 2 minutes followed by sieving the strawberries and blast freezing at -40°C for approximately 2 hours, then transferred to plastic bags and stored at -25°C until further use.

Part of the green strawberries were dyed by soaking the frozen green strawberries in an aqueous solution of Ponceau Red (0.01%) for 24 hours at ambient temperature.

The result was three batches of strawberries 1A: fully ripe, 1B unripe, green; 1C unripe, red.

### Example 2

### Alternative preparation methods

Example 1 was repeated with alternative dyes as follows:

| Example | Dye |
|---|---|
| 2A | Ponceau Red (0.02%) |
| 2B | Carmonisine (0.01%) |

Example 1 was repeated by varying the holding time in the semi-candying process as follows:

| Example | holding time |
|---|---|
| 2C | 24 hours |
| 2D | 66 hours |

In 2D the glucose syrup was changed every 24 hours by sieving the strawberries, discarding the old liquor and adding fresh liquor.

### Example 3

The drip loss of strawberries according to example 1A was compared to the drip loss of strawberries according to example 1B.

The following method was used: frozen diced strawberries (400g) were allowed to thaw in a controlled environment cabinet at a constant temperature of +20°C for a period of 4 hours. Samples were supported on a grid upon a funnel, and liquor was collected into beakers positioned on balances beneath the funnels. Liquor weight increases were automatically recorded by a computer interfaced with the balances so that the percentage weight loss could be calculated for each sample.

### Results:

| Sample | drip loss (wt%) test 1/2 |
|---|---|
| 1A | 21.3% / 22.2% |
| 1B | 0 % / 0.5% |

### Example 4 Preparation of ice-cream

An ice cream of the following formulation was prepared:

### Standard Dairy Ice Cream Formulation

| Ingredient | wt% |
|---|---|
| Water | 62.24% |
| Butterfat | 10.00% |
| Skimmed Milk Powder | 12.00% |
| Sucrose | 15.00% |
| Emulsifier | 0.40% |
| Stabiliser | 0.34% |
| Flavouring | 0.01% |
| Colouring | 0.01% |

The method of preparation:Ice cream was manufactured using a pilot plant facility, with approximately 50kg batch size. Cold tap water was added to the premix vessel followed immediately by the skimmed milk powder. Mixing was carried out using a high shear Silverson Mixer. The mix was heated using the steam jacket surrounding the premix vessel. When the temperature reached approximately 40°C, sugars, stabilisers, flavours, and colours were added. Previously melted butterfat and emulsifiers were added at 60°C, followed by further heating to 65°C. At this point the mix was passed through a single stage homogeniser at 2000psi, pasteurised at ca. 83-87°C for 12.5 seconds, and then cooled to ca. 5-10°C using a cold water jacket prior to ageing. Ageing was carried out for 2 hours minimum at 5°C. Ice cream mix was frozen using a Crepaco C-250 continuous freezer fitted with a solid dasher. Freezer operating conditions were kept constant, with a throughput of lkg/min, an overrun of 100%, and an extrusion temperature of -5°C. Extruded ice cream was collected in 2 litre plastic ice cream tubs, hardened overnight in a blast freezer at ca. -35°C, and then stored in a cold room at ca. -22°C until required.

### Example 5

Strawberries of example 1 and 2 were included in the ice-cream of example 4 by tempering the ice-cream to -10°C and mixing the strawberries in using a low speed mixer.

The level of strawberries in the product was 30wt%.

### Example 6

Strawberry ice cream as obtained in example 5 using strawberries of Example 1A and 1B were compared for flavour and texture by a panel of trained assessors. Panelling was carried out under red light to mask the green appearance of the strawberries.

The green strawberry sample was scored as significantly higher in fibrousness, chewiness and firmness and lower in icyness.

Although the taste of the product with the green strawberries was slightly less than the taste of the product with red strawberries, the taste of the both products was still acceptable.

### Example 7

Further applications of frozen strawberries:
- 7A:: Frozen strawberries of example 1C, 2A-B. Can advantageously be used for decorating an ice-cream cake.
- 7B:: A pastry shell can be filled with the strawberries of example 1C, 2A-2B to produce a fruit pastry product which can advantageously be stored at freezer temperatures.
- 7c:: The level of strawberries in ice-cream can be lowered e.g. to 5%. With these lower levels the taste difference between green and red strawberries becomes even smaller. Advantageously additional flavour materials can be added to the ice-cream for enhancing the strawberry taste.

### Example 8

Examples of how other fruits can be used:
- 8A:: Frozen unripe pieces of peach (0.05 cm³) can be added to water-ice to produce a fruity water-ice product.
- 8B:: Frozen unripe blackberries can (as a whole) be dyed with a suitable colour. 7wt% of blackberries can be added to an ice-cream formulation of example 5.
- 8C:: Cherries can be processed as in example 1C and added at a level of 8% to a yoghurt ice.
- 8D:: Raspberries can be processed as in example 1C and used for decorating a frozen fruit cake.

### Example 9

A mixture of red, ripe strawberry puree and fructose was made by blending frozen-thawed Senga Sengana strawberries and fructose in a food blender (40:60 (w/w)) at room temperature. This mixture was then chilled to 2°C. Frozen, diced, green, unripe Elsanta strawberries were stirred into this mixture and left at 2°C for 48 hours. The pieces were then removed from the mixture by sieving and the residual puree washed off using water. Pieces were then blotted dry and stored frozen at -20°C until use.

The resulting processed strawberries were significantly firmer than corresponding ripe Elsanta strawberries processed identically, as measured using quantitative descriptive analysis (QDA) techniques by a trained sensory panel (p<0.05). In addition, overall strawberry flavour of the processed green strawberries was not significantly different than that of the processed red ripe strawberries.

### Example 10

Frozen, diced, red ripe, and green unripe Elsanta strawberries were allowed to equilibrate to 2°C overnight then air diced at 35-40°C using a drying oven until they had reached a weight equal to 50% of their starting weight. The dried pieces were transferred to a solution of 83% high fructose corn syrup at 2°C for 20 hours. Pieces were removed from the sugar solution by sieving, blotted dry, and stored at -20°C until use. Sensory analysis using QDA techniques with a trained sensory panel showed that the processed unripe strawberries were significantly firmer than their corresponding red counterparts (p<0.05).

## Claims

1. A frozen food product selected from the group consisting in ice cream, water ice, frozen yoghurt, sherbet, sorbet, ice milk, frozen custard, granitas, frozen fruit purees and mixtures thereof comprising unripened fruit pieces wherein said fruit pieces satisfy at least one of the following conditions:
(i) the ratio of solubility index i.e. the level of soluble solids divided by the level of insoluble solids; for ripe fruit to the solubility index of the fruit pieces is more than 1.1;
(ii) the drip loss of the fruit pieces is less than 5 wt%.

2. A frozen food product according to claim 1 being a frozen confection.

3. A frozen food product according to claim 1 or 2, wherein the fruit is soft fruit.

4. A frozen food product according to claim 3, wherein the fruit is red fruit, particularly strawberry.

5. A frozen confection according to one or more of the preceding claims, wherein unripened fruit pieces are used which are optionally dyed to their ripened colour.

6. A frozen confection according to any one of claims 1 or 3 to 4, wherein unripened fruit pieces are used which are infused with a mixture of the corresponding ripe fruit puree and sugar to provide fruit pieces having the colour of ripe fruit.

7. A frozen confection according to one or more of the preceding claims wherein the individual fruit pieces have a volume of from 0.008 to 8 cm³.

## Patentansprüche

1. Gefrorenes Lebensmittelprodukt, ausgewählt aus der Gruppe bestehend aus Eiskrem, Wassereis, gefrorenem Joghurt, Sherbet, Sorbet, Eismilch, gefrorenem Pudding, Granitas, gefrorenen Fruchtbreien und Gemischen daraus, umfassend unreife Fruchtstükke, wobei besagte Fruchtstücke mindestens eine der folgenden Bedingungen erfüllen:
(i) Das Verhältnis des Löslichkeitsindexes, also dem Anteil an löslichen Feststoffen geteilt durch den Anteil an nicht löslichen Feststoffen, für reife Früchte zu dem Löslichkeitsindex der Fruchtstücke ist grösser als 1,1;
(ii) Der Tropfverlust der Fruchtstücke ist kleiner als 5 Gew.-%.

2. Gefrorenes Lebensmittelprodukt gemäss Anspruch 1, welches eine gefrorene Süssware ist.

3. Gefrorenes Lebensmittelprodukt gemäss Anspruch 1 oder 2, worin die Frucht Weichfrucht ist.

4. Gefrorenes Lebensmittelprodukt gemäss Anspruch 3, worin die Frucht Rotfrucht, insbesondere Erdbeere ist.

5. Gefrorene Süssware gemäss einem oder mehreren der vorhergehenden Ansprüche, worin unreife Fruchtstücke verwendet werden, welche gegebenenfalls zu ihrer gereiften Farbe gefärbt werden.

6. Gefrorene Süssware gemäss einem der Ansprüche 1 oder 3 bis 4, worin unreife Fruchtstücke verwendet werden, welche mit einem Gemisch aus dem Brei aus entsprechenden reifen Früchten und Zukker ziehen gelassen werden, um Fruchtstücke mit der Farbe von reifen Früchten vorzusehen.

7. Gefrorene Süssware gemäss einem oder mehreren der vorhergehenden Ansprüche, worin die einzelnen Fruchtstücke ein Volumen von 0,008 bis 8 cm³ haben.

## Revendications

1. Produit alimentaire congelé sélectionné dans l'ensemble consistant en crème glacée, glace à l'eau, yaourt congelé, jus de fruits congelé, sorbet, lait glacé, crème anglaise congelée, granités, purées de fruits congelées et mélanges de ceux-ci, contenant des morceaux de fruits avant maturité, dans lequel lesdits morceaux de fruits remplissent au moins une des conditions suivantes :
(i) le rapport de l'indice de solubilité, c'est-à-dire la teneur en matières solides solubles divisée par la teneur en matières solides insolubles, des fruits mûrs à l'indice de solubilité des morceaux de fruits est supérieur à 1,1 ;
(ii) la perte d'exsudat des morceaux de fruits est inférieure à 5% en poids.

2. Produit alimentaire congelé selon la revendication 1, qui est une confiserie congelée.

3. Produit alimentaire congelé selon la revendication 1 ou 2, dans laquelle le fruit est un fruit mou.

4. Produit alimentaire congelé selon la revendication 3, dans laquelle le fruit est un fruit rouge, en particulier la fraise.

5. Confiserie congelée selon l'une quelconque des revendications précédentes, dans laquelle on utilise des morceaux de fruits avant maturité qui sont éventuellement colorés en leur couleur de maturité.

6. Confiserie congelée selon l'une quelconque des revendications 1 ou 3 à 4, dans laquelle on utilise des morceaux de fruits avant maturité qui sont infusés avec un mélange de purée de fruits mûrs correspondants et de sucre pour obtenir des morceaux de fruits ayant la couleur du fruit mûr.

7. Confiserie congelée selon l'une quelconque des revendications précédentes, dans laquelle les morceaux de fruits individuels ont un volume compris entre 0,008 et 8 cm³.
